# EUROPEAN PATENT SPECIFICATION

(11) **EP 2 199 110 B1**
(45) Date of publication and mention of the grant of the patent: **20.03.2013**
(21) Application number: 09178308.4
(22) Date of filing: 08.12.2009
(51) Int. Cl.: B60C 11/02, B29D 30/56

(54) **Retreaded tire and methods of preparation**
Runderneuerter Reifen und Herstellungsverfahren dafür
Pneu rechapé et procédés de préparation

(30) Priority: 18.12.2008 US 337692
(43) Date of publication of application: 23.06.2010
(73) Proprietor: The Goodyear Tire & Rubber Company, Akron, OH 44316-0001 (US)
(72) Inventor: Majumdar, Ramendra Nath, Hudson, OH 44236 (US); Norton, Dale Roy, Medina, OH 44256 (US)
(74) Representative: Kutsch, Bernd

(56) References cited:
- DE-B- 1 228 525
- GB-A- 1 510 186
- JP-A- 6 286 419
- JP-A- 9 070 903

## Description

### Field of Invention

This invention relates to a retreated tire and methods of its preparation.

### Background of the Invention

Retreaded tires may be prepared by applying a pre-cured rubber tread (e.g. rubber tread strip which has been cured) to a circumferential uncured rubber layer, usually referred to as a "cushion layer", which overlays a buffed tire rubber carcass from which the original rubber tread has been removed by abrading it away, to form an assembly thereof and the assembly cured at an elevated temperature to form a cured retreaded rubber tire.

The uncured cushion rubber layer may be applied to the buffed tire carcass where the cushion layer which has a surface with suitable building tack for which a need of applying a tack enhancing cement to the pre-cured rubber tread can be eliminated. Cushion rubber layers with building tack are described in US-A-5,503,940, US-A- 6,186,202 and US-A- 2005/0211351.

For this invention, a cured rubber tread strip or layer is provided with a plurality of lockable cavities (open cavities) in its bottom surface and which has a protective, polymeric film releasibly (removably) adhered to its bottom surface including the walls of its lockable cavities.

For this invention, a retreaded tire is provided with a rubber tread having a plurality of lockable cavities wherein said tread is mechano-chemically bonded to a rubber tire carcass by its lockable cavities.

Such cured rubber tread strip (which might sometimes be referred to as being a pre-cured rubber tread strip) which contains a plurality of lockable cavities molded into a bottom surface thereof may be prepared by:
(A) applying a releasable film (a flat film which optionally has a textured surface) to a surface of an uncured rubber tread strip to form a composite thereof;
(B) applying a mold release agent to the surfaces of said uncured tread rubber strip composite including at least a portion of the surface of said protective polymeric film on said rubber strip;
(C) applying the release agent coated uncured tread rubber strip composite to a metal plate where said metal plate has:
   (1) a pluralilty of protrusions thereon to form an assembly thereof, or
   (2) a roughened surface to form an assembly thereof;
(D) positioning said assembly in a suitable mold and applying an elevated temperature and pressure to:
   (1) cause said protrusions of said metal plate to extend into and form lockable cavities in the surface of rubber tread strip, or
   (2) cause said roughened surface to impart a roughened surface on the surface of said rubber tread strip;
and to cure said lockable cavity-containing, or roughened surface-containing, rubber tread strip at a temperature in a range of from about 145°C to about 180°C to form a rubber tread strip composite comprised of a cured rubber tread strip with a plurality of lockable cavities in its bottom surface, or roughened surface on its bottom surface, and said removable protective polymeric film molded thereon on said cured rubber tread strip including the walls of its lockable cavities or roughened surface.

In such manner, the uncured rubber tread strip may be molded and pre-cured in a suitable mold together with the removable polymeric film which becomes molded onto (removably adhered to) a surface of the tread rubber (tread rubber strip) during its molding and curing operation.

The removable film may then be removed from the pre-cured tread rubber strip to provide a "clean" rubber surface for the pre-cured rubber tread.

In this manner, the "clean" rubber surface is provided without the necessity of buffing the rubber surface of the tread strip. This is seen herein as being a particular advantage in a sense that mechanically administered buffing, of abrading, submits the cured rubber surface to additional heat history and promotes surface oxidation of the buffed rubber surface.

This overall procedure is entirely different from a past practice of buffing the tread strip surface, applying cement to the buffed surface and post-applying a protective plastic film (usually polyethylene film) to prevent contamination of the cemented surface. By the practice of this invention, surface contamination and atmospheric oxidation of the cured tread can be prevented, or retarded, during storage of the pre-cured rubber tread without a requirement of post application of a cement and protective plastic film.

The lockable cavities for the tire tread strip are not limited to a particular shape and configuration.

The individual lockable cavities in the tread strip may have a circular, oval, rectangular, longitudinal, serpentine, trapezium, or sinusoidal cross-sectional shape.

For example, the individual lockable cavities in the tread strip may be individually dispersed, transversally oriented or longitudinally oriented insofar as the surface of the tread strip is concerned.

Historically, a significant problem envisioned in simply applying a protective polymeric film for such purpose to the surface of the uncured rubber tread strip is that a typical thermoplastic film, such as for example a polyethylene film, is viewed herein as being unsatisfactory in a sense that such thermoplastic film does not have sufficient dimensional stability and resistance to tear for removal from the surface of the tread rubber strip after it is removed from the mold and, further, that it typically has a melting point (ASTM D98) significantly below 150°C and would therefore normally melt at typical rubber cure temperatures such as for example 150°C (for example, in a range of from 145°C to 180°C).

Therefore, a suitable film for such purpose is viewed herein as being significantly dimensionally stable so that it can be removed from the surface of the pre-cured rubber tread surface after the uncured tread strip to which it has been applied has been molded and cured in a suitable mold at an elevated temperature (e.g. at least 145°C and in a range of, for example, from 145°C to 180°C).

In practice, it has been found that a film comprising nylon 6,6 or nylon 6 may be used in the sense of applying it to a surface of said uncured tread rubber strip to form a removable film bonded (physically adhered) to the bottom surface of the cured tread rubber strip.

JP-A- 09-070903, which discloses a retreaded tire according to the preamble of claim 1, and GB-A- 1 510 186 describe the retreading of a tire using pre-cured tread strip which is adhered to a tire surface. The inner side of the precured tread strip is provided with a rough surface and protected by a protecting sheet made from a polymeric or plastic material.

DE-A- 1 228 525 describes the manufacturing of a pneumatic tire wherein a tread made from polyurethan is cast onto a tire carcass and then cured with the carcass. The polyurethane tread and the carcass are interlocked using a trapezium figured structure.

JP-A- 06-286419 describes the manufacturing of a tire wherein a tire base body and a tire tread are interconnected using wedge shaped projecting parts.

### Summary and Practice of the Invention

The invention relates to a retreated tire according to claim 1, and methods of preparing a retreaded tire according to claim 5 or 6.

Dependent claims refer to preferred embodiments of the invention.

In accordance a preferred embodiment of the invention a cured rubber tire tread strip is provided having a bottom surface with a plurality of lockable cavities, which has a protective, polymeric film releasably adhered to (e.g. releasably bonded to) its bottom surface.

The lockable cavities in the cured or uncured tread rubber strip are lockable in a sense of being capable of interlocking (e.g. mechano-chemically interlocking) with a rubber cushion layer positioned on a tire cured rubber carcass wherein portions of said rubber cushion layer are caused to protrude into said lockable cavities following which the rubber cushion layer is cured to physically and chemically lock (e.g. secure) said tread rubber strip to said rubber cushion layer and thereby form a tire assembly comprised of a tire carcass and tread strip with said cushion layer therebetween.

Significant aspects of this invention are at least threefold, namely providing of said lockable cavities in said rubber tread strip, or providing said roughened surfaced rubber tread strip, providing said adherent, bonded, releasable polymeric film to protect the surface of said rubber strip, and removal of said polymeric film from the cured rubber tread strip to thereby provide a clean rubber surface of the cured tread rubber strip and particularly the walls of said lockable cavities to make the surface and lockable cavities of the tread rubber strip available for interlocking with a cushion rubber layer for a tire.

In a further preferred embodiment of this invention, a retreaded tire is provided which comprises a circumferential cured rubber tread layer having a surface which contains cavities which are mechano-chemically interlocked with a cushion rubber layer of a tire rubber carcass.

In a further preferred embodiment of this invention, a pre-cured tread for a retreaded tire is prepared by a process which comprises;
(A) applying a protective removable polymeric film to an uncured rubber tread strip to form a composite thereof, wherein said polymeric film has a melt point, ASTM D789, higher or significantly higher than the cure temperature for said tread rubber strip (desirably a melt point of at least 190°C);
(B) applying a mold release agent (e.g. a polysiloxane based release agent) to the surfaces of said uncured tread rubber strip composite including at least a portion of the surface of said protective polymeric film on said rubber strip;
(C) applying the release agent coated uncured tread rubber strip composite to a metal plate where said metal plate has a plurality of protrusions thereon to form an assembly thereof;
(D) positioning said assembly in a suitable mold and applying an elevated temperature and pressure to cause said protrusions of said metal plate to extend into and form lockable cavities in the surface of rubber tread strip, and to cure said lockable cavity-containing rubber tread strip at an elevated temperature (e.g. temperature in a range of from 145°C to 180°C) to form a rubber tread strip composite comprising a cured rubber tread strip with a plurality of lockable cavities in its bottom surface, and said removable protective polymeric film molded thereon on said cured rubber tread strip including the walls of its lockable cavities surface.

Alternatively, a cured rubber tread strip is prepared by a process which comprises;
(A) applying a protective removable polymeric film to an uncured rubber tread strip to form a composite thereof, wherein said polymeric film has a melt point, ASTM D789, higher or significantly higher than the cure temperature for said tread rubber strip (desirably a melt point of at least 190°C), wherein said protective polymeric film has a plurality of protrusions thereon;
(B) applying a mold release agent (e.g. a polysiloxane based release agent) to the surfaces of said uncured tread rubber strip composite including at least a portion of the surface of said protective polymeric film on said rubber strip;
(C) applying the release agent coated uncured tread rubber strip composite to a flat surfaced metal plate;
(D) positioning said assembly in a suitable mold and applying an elevated temperature and pressure to cause said protrusions of said protective polymeric film to extend into and form lockable cavities in the surface of the rubber tread strip and curing said rubber tread strip at an elevated temperature (e.g. temperature in a range of from 145°C to 180°C) to form a cured rubber tread strip having said removable protective polymeric film molded thereon on said cured rubber tread strip including the walls of its lockable cavities.

In practice, said polymeric film is not melted onto the tread rubber surface during said molding and curing of the tread rubber strip (because said polymeric film has a melt point significantly higher than the cure temperature for the tread rubber strip) and is thereby removable from the cured rubber tread.

In further practice of this invention, the protective polymeric film may be removed from the surface of the cured rubber tread strip to yield a cured rubber tread strip having a clean unbuffed rubber surface free from mold release agent coating.

In additional practice of this invention, a cured rubber tread strip may be provided having a clean, unbuffed surface free of mold release agent coating, particularly being prepared by said method.

As hereinbefore mentioned, said protective polymeric film is applied to the surface of said uncured rubber tread strip.

In a further preferred embodiment of this invention, a process of preparing a retreaded tire comprises:
(A) applying a clean, (uncemented), unbuffed surface of a pre-cured rubber tire tread layer to a circumferential uncured adhesive rubber layer, without an adhesive coating therebetween, wherein said circumferential uncured adhesive rubber layer overlays a cured rubber tire carcass to form an assembly thereof, and
(B) curing said assembly an elevated temperature and pressure to form a cured retreaded rubber tire;
   wherein said pre-cured rubber tire tread layer is prepared by:
   (1) applying a polymeric film to one surface of an uncured rubber tread strip to form a composite thereof;
   (2) applying a release agent coating to the surfaces of said composite, including at least a portion of said polymeric film;
   (3) applying the release agent coated uncured tread rubber strip composite to a metal plate where said metal plate has a pluralilty of protrusions thereon to form an assembly thereof;
   (4) positioning said assembly in a suitable mold and applying an elevated temperature and pressure to cause said protrusions of said metal plate to extend into and form lockable cavities in the surface of rubber tread strip and curing said lockable cavity-containing rubber tread strip at an elevated temperature (e.g. temperature in a range of from 145°C to 180°C) to form a rubber tread strip composite comprised of a cured rubber tread strip with a plurality of lockable cavities in its bottom surface and said removable protective polymeric film molded thereon on said cured rubber tread strip including the walls of its lockable cavities;
   (5) removing said polymeric film from said pre-cured rubber tread to provide a clean, unbuffed surface on said pre-cured rubber tread prior to applying said pre-cured tread to the circumferential uncured cushion rubber layer.

Alternatively, said pre-cured rubber tread layer for said retreaded tire may be prepared by:
(A) applying a protective removable polymeric film to an uncured rubber tread strip to form a composite thereof, wherein said polymeric film has a melt point, ASTM D789, significantly higher than the cure temperature for said tread rubber strip (desirably a melt point of at least 190°C), wherein said protective polymeric film has a plurality of protrusions thereon;
(B) applying a mold release agent (e.g. a polysiloxane based release agent) to the surfaces of said uncured tread rubber strip composite including at least a portion of the surface of said protective polymeric film on said rubber strip;
(C) applying the release agent coated uncured tread rubber strip composite to a flat surfaced metal plate;
(D) positioning said assembly in a suitable mold and applying an elevated temperature and pressure to cause said protrusions of said protective polymeric film to extend into and form lockable cavities in the surface of the rubber tread strip, and curing said rubber tread strip at an elevated temperature (e.g. temperature in a range of from 145°C to 180°C) to form a cured rubber tread strip having said removable protective polymeric film molded thereon on said cured rubber tread strip including the walls of its lockable cavities.

In practice, said polymeric film may be, for example, a nylon film.
Representative of nylon based polymeric films are, for example:
(A) films of ring opening polymerized lactams having from 6 to 12 carbon atoms (e.g. caprolactam) such as, for example, nylon 6 as a poly(imino(1-oxohexamethylene)) (polyamide-6) typically having a melting point in a range in a range of from 200°C to 220°C (ASTM D789), from the Honeywell Company, and
(B) films of a polycondensate of a diamine and dicarboxylic acid such as, for example, nylon 6,6 as a poly(iminohexamethyleneiminoadipoyl) (polyamide-66) typically having a melting point in a range of from 250°C to 260°C (ASTM D789), a product of the DuPont Company.

In one embodiment, said circumferential cushion rubber layer composition comprises, for example, a layer of an elastomeric rubber composition comprising at least one conjugated diene-based elastomer, for example, cis 1,4-polyisoprene rubber (usually natural rubber) and, optionally cis 1,4-polybutadiene rubber, which contains a bis-imide compound and tackifier resin (US-A- 5,503,940). For example, said bis-imide compound may comprise an N,N'm-xylene biscitraconic imide as Perkalink 900™, N,N'-m-phenylene bismaleimide, 1,1'(methylenedi-4,1-phenylene) bis maleimide, or combinations thereof (preferably comprising said N,N'm-xylene biscitraconic imide), the tackifier as a phenol-formaldehyde tackifier resin.

A significant aspect of the invention is considered herein as both providing a process of providing an improved pre-cured rubber tread with its plurality of lockable cavities, in the production of a cured rubber tread strip retreading a rubber tire with a cured rubber tread strip having a clean, unbuffed surface without a cement coating.

A further significant aspect of the invention is considered herein as both providing an improved tire retreading process and a resultant retread tire.

This is considered herein as being significant in a sense of providing a more secure mechano-chemical bonding of the lockable cavity-containing rubber tread to the tire carcass with the intermediate cushion layer.

### Brief Description of the Drawings

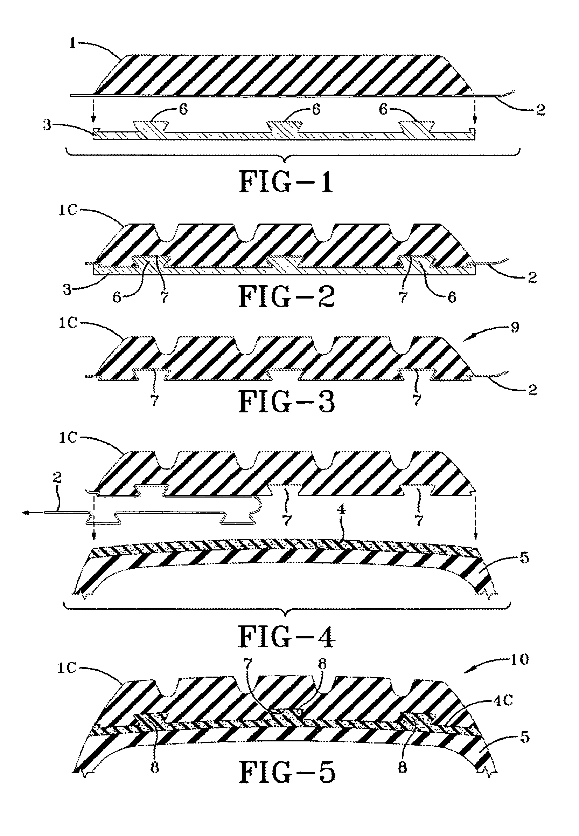

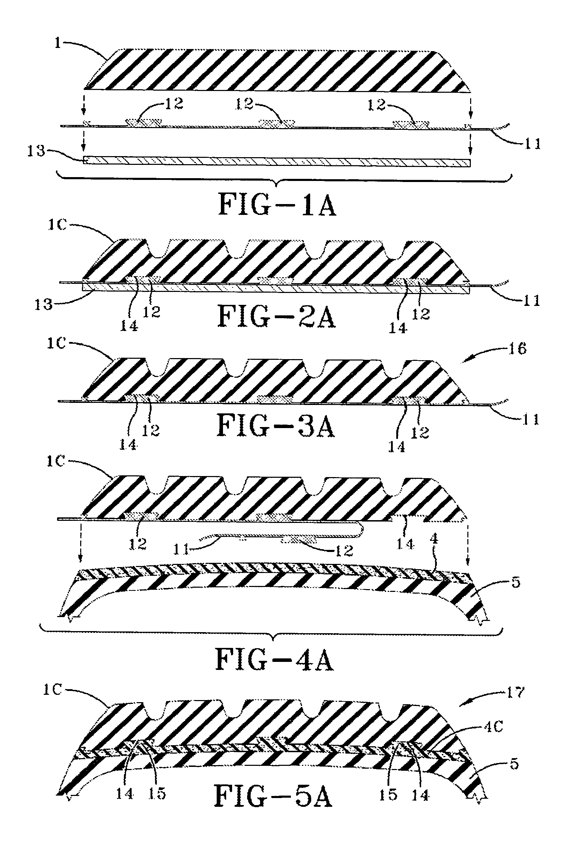

Drawings are provided for a further understanding of the invention. In the Drawings, Figures 1 through 5 and Figures 1A through 5A are provided to depict cross sections of a tread and cushion layer-containing tire to illustrate a tire tread with a plurality of lockable cavities and associated retreaded tire.

### In the Drawings FIG 1 through FIG 5

In FIG 1, an uncured tread rubber strip 1 is depicted with a heat deformable polymeric film 2 applied to its bottom surface to form a composite of the rubber strip 1 and polymeric film 2. A rigid metal plate 3 is also shown with a plurality of protrusions 6 of a trapezium cross-section extending from its upper surface and facing the aforesaid film 2 layer of the composite. The polymeric film 2 comprises a protective polymeric film of nylon 6 (melt point in a range of from 200°C to 220°C, ASTM D789) or nylon 6,6 (melt point in a range of from 250°C to 260°C, ASTM D789). Preferably, a release agent coating of a polysiloxane is applied to the surfaces of tread strip 1 and protective film 2.

In FIG 2, the composite of uncured tread rubber strip 1 with its applied protective polymeric film 2 and metal plate 3 are pressed together in a suitable mold to cause the protrusions 6 of the trapezium design (short parallel side affixed to the metal plate) to press into and form a plurality of lockable cavities 7 of a trapezium configuration in the composite. The tread rubber strip 1 is then cured within the mold at an elevated temperature of about 180°C to form a cured tread strip 1C containing the protective polymeric film strip 2 and lockable cavities 7 in its bottom surface.

In FIG 3, the metal plate 3 is removed to leave the composite 9 composed of the cured tread 1C with its protective, removable polymeric film strip 2 on its bottom surface and the plurality of lockable cavities 7 of trapezium configurations in its bottom surface.

In FIG 4, the protective polymeric film strip 2 is peeled away from the bottom surface of the cured rubber tread strip 1C leaving the lockable cavities 7 exposed in its bottom surface. Further, a tire casing 5 is provided with its tread having been buffed off and an uncured cushion rubber layer 4 applied to its buffed surface.

In FIG 5, the cured rubber tread 1C is pressed onto the uncured rubber cushion 4 and the resulting assembly placed in an envelope and the enveloped assembly placed in a heated chamber (autoclave). The elevated temperature of the chamber and pressure exerted by the envelope causes portions 8 of the uncured rubber cushion 4 to extend into the lockable cavities 7 of the cured tread 1C, to form a retreaded tire 10 by curing the rubber cushion layer 4 to form a cured rubber cushion layer 4C and to thereby both bond the rubber cushion layer 4 to the tire carcass 5 and to create a mechano-chemical interlocking of the trapezium configured lockable cavities of the cured tire tread 1C and cured rubber cushion layer 4C.

### In the Drawings FIG 1A through FIG 5A

In FIG 1A, an uncured tread rubber strip 1 is depicted. A protective heat deformable polymeric film 11 having a plurality of protrusions 12 thereon its depicted rigid flat surfaced metal plate 13 is also shown. The polymeric film 11 comprises a protective polymeric film of nylon 6 (melt point in a range of from 200°C to 220°C, ASTM D789) or nylon 6,6 (melt point in a range of from 250°C to 260°C, ASTM D789). Preferably, a release agent coating of a polysiloxane is applied to the surfaces of the tread strip 1 and the protective film 11.

In FIG 2A, the uncured tread rubber strip 1 the protective polymeric strip 11 is provided and fitted to the metal strip 13 to form a composite or plate thereof. The composite is placed in a suitable mold to cause the protrusions 12 to press into and form a plurality of lockable cavities 14 in the rubber tread strip while curing the rubber strip within the mold at an elevated temperature of about 180°C to form a cured tread strip 1C containing the protective polymeric film strip 11 and associated lockable cavities 14 in its bottom surface.

In FIG 3A, the metal plate 13 is removed to leave a composite 16 composed of the cured tread 1C with its protective, removable polymeric film strip 11 on its bottom surface and the plurality of lockable cavities 14 in its bottom surface.

In FIG 4A, the protective polymeric film strip 11 is peeled away from the bottom surface of the cured rubber tread strip 1C leaving the lockable cavities 14 exposed in its bottom surface. Further, a tire casing 5 is provided with its tread having been buffed off and an uncured cushion rubber layer 4 applied to its buffed surface.

In FIG 5A, the cured rubber tread 1C is pressed onto the uncured rubber cushion 4 and the resulting assembly placed in an envelope and the enveloped assembly placed in a heated chamber (autoclave). The elevated temperature of the chamber and pressure exerted by the envelope causes portions 15 of the uncured rubber cushion 4 to extend into the lockable cavities 14 of the cured tread 1C, to form a retreaded tire 17 by curing the rubber cushion layer 4 to thereby both bond the now cured rubber cushion layer 4C to the tire carcass 5 and to create a mechano-chemical interlocking of lockable cavities 14 of the cured tire tread 1C and cured rubber cushion layer 4C.

For the cushion rubber layer 4, a rubber composition is provided which comprises an elastomeric rubber composition comprising at least one conjugated diene-based elastomer, for example, cis 1,4-polyisoprene natural rubber and, optionally cis 1,4-polybutadiene rubber, which contains a bis-imide compound and tackifier resin (US-A- 5,503,940). Said bis-imide compound comprises N,N'm-xylene biscitraconic imide, together with a tackifier as a phenol-formaldehyde tackifier resin.

The following example is provided to further illustrate the invention. The parts and percentages, if referenced, are by weight unless otherwise indicated.

### EXAMPLE I

Pre-cured tread rubber samples (Test Samples) were prepared to evaluate their adhesion to a tread cushion rubber composition.

For the adhesion evaluation, uncured rubber samples in a shape of 6 inches by 6 inches with a thickness of 0.095 inch (about 15.2 x 15.2 x 0.24 cm) was die-cut from a milled 0.24 cm thick natural rubber based rubber strip. The rubber sample was in one sense, although smaller, similar to the uncured tread strip 1 depicted in FIG 1. One side of the rubber sample was reinforced with a 0.033 inch (0.08 cm) thick treated fabric to add dimensional stability to the rubber sample.

### A. Preparation of Smooth Surfaced Pre-Cured Rubber Test Sample (Test Piece 1)

An undrawn nylon-6 film was applied to the non-fabric side of an uncured rubber Test Sample. The nylon-6 film side of the Test Sample was pressed against a smooth surface of a metal plate and the Test Sample cured (8 minutes at 182°C and pressure of 0.7 MPa) to form a smooth surfaced pre-cured Test Sample.

### B. Preparation of Rough Surfaced Pre-Cured Rubber Test Sample (Test Piece 2)

An undrawn nylon-6 film was applied to the non-fabric side of an uncured rubber Test Sample. The nylon-6 film side of the Test Sample was pressed against a rough, textured surface of a metal plate and the Test Sample cured (8 minutes at 182°C and pressure of 0.7 MPa) to form a smooth surfaced pre-cured Test Sample.

### C. Preparation of Cavity Containing Pre-Cured Rubber Test Sample (Test Piece 3)

An undrawn nylon-6 film was applied to the non-fabric side of an uncured rubber Test Sample. The nylon-6 film side of the Test Sample was pressed against a metal plate with a surface containing a metal strip as a protrusion of a trapezium configuration affixed to and extending outward from the plate to form a plurality of lockable cavities in the Test Sample surface - and the Test Sample cured (8 minutes at 182°C and pressure of 0.7 MPa) to form a pre-cured Test Sample containing a plurality of lockable cavities in its surface. The protrusions in the metal plate were prepared by affixing two 6 inch (15.2 cm) long metal strips to a smooth metal plate. The protrusions had a trapezium shaped cross section similar to the protrusions depicted in FIG 1 of the Drawings. The depth of the trapezium shaped protrusion was 0.075 inch (0.2 cm) and the two sides were 0.372 inch (0.1 cm) and 0.5 inch (1.3cm) where the 0.375 inch (0.1 cm) side was affixed to the smooth surface of the metal plate. The plate was aligned in such a way that the metal strips were perpendicular to the cords of the fabric on the other side of the Test Sample.

### D. Preparation of Uncured Tacky Cushion Rubber Sample (Test Piece 4)

An uncured rubber sample in a shape of 6 inches by 6 inches with a thickness of about 0.095 inch (15.2 x 15.2 x 0.24 cm) was die-cut from a milled 0.24 cm thick rubber strip. The rubber sample was in one sense similar to the uncured cushion rubber strip 4 depicted in FIG 4 and comprise a 40 phr natural rubber and 60 phr cis 1,4-polybutadiene rubber based rubber composition containing an N,N'm-xylene biscitraconic imide, together with a tackifier resin (e.g. phenol-formaldehyde tackifier resin). One side of the rubber sample was reinforced with a fabric to add dimensional stability to the rubber sample.

### E. Adhesion Testing of the Test Rubber Samples to Said Cushion Rubber

After removal of the nylon-6 protective removable film, the resulting clean surfaces of the Test Sample Pieces 1, 2 and 3, respectively, were individually pressed against a Cushion Rubber Sample Piece 4 with the fabric cords being aligned in the same direction and then cured at 8 minutes at 182°C and pressure of 0.7 MPa. Strips of 2.54 cm width were died-out along the cord direction of the fabric and each Test piece was 2.54 cm wide by 15.24 cm long. The Test pieces were pulled using an Instron instrument and adhesions, force to pull them apart, (steady state average peak load in N/cm) were measured at room temperature (23°C) and at 95°C at a cross head speed of 50.8 cm/min. The results are shown in Table 1.

**Table 1**

| Adhesion for Smooth, Rough and Lockable Cavity Surfaced Test Samples | | | |
|---|---|---|---|
| Property | Smooth | Rough | Cavity |
| Adhesion at Room Temperature (N/cm) | 109 | 191 | 281 |
| Adhesion at 95°C (N/cm) | 37 | 56 | 110 |

It can be seen from Table 1 that an increase in room temperature adhesion of about 75 percent and of about 158 percent was obtained by the change in the surface of the cured rubber strip from being smooth to being rough to containing the lockable cavity.

It can further be seen from Table 1 that an increase in 95°C adhesion of about 51 percent and of about 197 percent was obtained by the change in the surface of the cured rubber strip being smooth to being rough to containing the lockable cavity.

These are considered herein to be very significant increases in the representative adhesions.

## Claims

1. A retreaded tire comprising a circumferential cured tread rubber layer (1 C) and a carcass (5), the cured tread rubber layer (1 C) comprising a surface comprising cavities (7, 14) which are mechano-chemically interlocked with a cushion rubber layer (4) overlaying the carcass (5), **characterized in that** the retreaded tire is free of an adhesive coating between the cured tread rubber layer (1 C) and the cushion rubber layer (4) and **in that** the cushion rubber layer (4) is of a rubber composition comprising at least one conjugated diene-based elastomer which contains a bis-imide compound and a tackifier resin.

2. The retreaded tire of claim 1 wherein the cushion rubber layer (4) is of a rubber composition comprising natural (cis 1,4-polyisoprene) rubber and cis 1,4-polybutadiene rubber, and wherein the bis-amide comprises N,N'm-xylene biscitraconic imide; N,N'-m-phenylene bismaleimide, 1,1'(methylenedi-4,1-phenylene) bis maleimide, or combinations thereof.

3. The retreaded tire of claim 1 or 2 wherein the tackifier comprises a phenol-formaldehyde tackifier resin.

4. The retreaded tire of claim 1 wherein the cavities (7, 14) are trapezium configured cavities.

5. A process of preparing a retreaded tire (10, 17), the process comprising:
(A) applying a clean, uncemented and unbuffed surface of a cured tread rubber layer (1 C) to a circumferential uncured cushion rubber layer (4), without an adhesive coating therebetween, wherein the circumferential uncured cushion rubber layer (4) overlays a cured carcass (5), to form an assembly thereof, and
(B) curing the assembly at an elevated temperature to form the retreaded tire (10, 17);
wherein the cured tread rubber layer (1C) is prepared by:
(1) applying a removable polymeric film (2) to at least one surface of an uncured tread rubber strip (1) to form a composite (9) thereof;
(2) applying a release agent coating to surfaces of the composite (9) including at least a portion of the polymeric film (2);
(3) applying the release agent coated composite (9) to a metal plate (3) to form an assembly thereof, wherein the metal plate (3) has a plurality of protrusions (6) thereon;
(4) positioning the assembly in a mold and applying an elevated temperature and pressure to cause the protrusions (6) of the metal plate (3) to extend into and to form lockable cavities (7) in the surface of uncured tread rubber strip (1), and curing the lockable cavity-containing uncured tread rubber strip (1) at an elevated temperature to form a cured tread rubber strip composite comprising a cured tread rubber layer (1C) with a plurality of lockable cavities (7, 14) in its bottom surface and the removable polymeric film (2) molded on the cured tread rubber layer (1C) including the walls of its lockable cavities (7, 14);
(5) removing the polymeric film (2) from the cured tread rubber layer (1 C) to provide a clean, unbuffed surface on the cured tread rubber layer (1 C) prior to applying the cured tread rubber layer (1 C) to the circumferential uncured cushion rubber layer (4).

6. A process of preparing a retreaded tire (10, 17), the process comprising:
(A) applying a clean, uncemented and unbuffed surface of a cured tread rubber layer (1C) to a circumferential uncured cushion rubber layer (4), without an adhesive coating therebetween, wherein the circumferential uncured cushion rubber layer (4) overlays a cured carcass (5), to form an assembly thereof, and
(B) curing the assembly at an elevated temperature to form the cured retreaded tire (10, 17);
wherein the cured tread rubber layer (1 C) is prepared by:
(1) applying a removable polymeric film (2) to at least one surface of an uncured tread rubber strip (1) to form a composite thereof, wherein the polymeric film (2) has a melt point, ASTM D789, higher or significantly higher than the cure temperature for the uncured tread rubber strip (1), and wherein the polymeric film (2) has a plurality of protrusions (6) thereon;
(2) applying a mold release agent to surfaces of the composite (9) including at least a portion of the surface of the polymeric film (2) on the uncured tread rubber strip (1);
(3) applying the release agent coated composite (9) to a flat surfaced metal plate (3) and forming an assembly of the release agent coated composite (9) and the metal plate (3);
(4) positioning the assembly in a mold and applying an elevated temperature and pressure to cause the protrusions (6) of the polymeric film (2) to extend into and form lockable cavities (7) in the surface of the uncured tread rubber strip (1), and curing the uncured tread rubber strip (1) at an elevated temperature to form a cured rubber tread strip or layer (1) having the removable polymeric film (2) molded thereon including the walls of its lockable cavities (7).

7. The process of claim 5 or 6 wherein the uncured cushion rubber layer (4) is of a rubber composition comprising at least one conjugated diene-based elastomer which contains a bis-imide compound and a tackifier resin.

8. The process of claim 7 wherein the uncured cushion rubber layer (4) comprises natural (cis 1,4-polyisoprene) rubber and cis 1,4-polybutadiene rubber, and wherein the bis-amide comprises N,N'm-xylene biscitraconic imide; N,N'-m-phenylene bismaleimide, 1,1'(methylenedi-4,1 -phenylene) bis maleimide, or combinations thereof.

9. The process of claim 7 wherein the tackifier comprises a phenol-formaldehyde resin.

10. The process of claim 5 or 6 wherein the polymeric film (2), upon its removal from the cured tread rubber layer (1 C) and associated walls of the lockable cavities, provides a clean rubber surface of the cured tread rubber layer (1 C), including the walls of the lockable cavities (7), to thereby make the surface and the lockable cavities of the cured tread rubber layer (1C) available for mechano-chemical interlocking with the uncured cushion rubber layer (4) of the tire (10, 17).

11. The process of claim 5 or 6 wherein the cavities are trapezium configured cavities.

12. The process of claim 5 or 6 wherein the polymeric film (2) compises nylon 6,6 or nylon 6 or is a nylon film or a nylon based polymeric film.

13. The process of claim 5 or 6 wherein the release agent is a polysiloxane based release agent.

14. The process of claim 5 or 6 wherein the retreaded tire (10, 17) is free of an adhesive coating between the cured tread rubber layer (1 C) and the cushion rubber layer (4).

## Patentansprüche

1. Runderneuerter Reifen, umfassend eine umfangsgerichtete vulkanisierte Laufflächengummischicht (1 C) und eine Karkasse (5), wobei die vulkanisierte Laufflächengummischicht (1 C) eine Oberfläche umfasst, welche Hohlräume (7, 14) umfasst, die mechanisch-chemisch mit einer über der Karkasse (5) liegenden Polstergummischicht (4) verriegelt sind, **dadurch gekennzeichnet, dass** der runderneuerte Reifen zwischen der vulkanisierten Laufflächengummischicht (1 C) und der Polstergummischicht (4) frei von einer Klebstoffbeschichtung ist und dass die Polstergummischicht (4) aus einer Kautschukzusammensetzung besteht, die mindestens ein Elastomer auf Basis konjugierten Diens umfasst, das eine Bis-Imid-Verbindung und ein Tackifierharz enthält.

2. Runderneuerter Reifen nach Anspruch 1, wobei die Polstergummischicht (4) aus einer Kautschukzusammensetzung besteht, umfassend natürlichen (cis-1,4-Polyisopren-) Kautschuk und cis-1,4-Polybutadienkautschuk, und wobei das Bis-Amid N,N'-m-Xylenbiscitraconimid; N,N'-m-Phenylenbismaleimid, 1,1'(Methylendi-4,1-phenylen)bismaleimid oder Kombinationen davon umfasst.

3. Runderneuerter Reifen nach Anspruch 1 oder 2, wobei der Tackifier ein Phenol-Formaldehyd-Tackifierharz umfasst.

4. Runderneuerter Reifen nach Anspruch 1, wobei die Hohlräume (7, 14) trapezförmig gestaltete Hohlräume sind.

5. Verfahren zur Herstellung eines runderneuerten Reifens (10, 17), wobei das Verfahren umfasst:
(A) Anbringen einer sauberen, nicht mit Klebstoff versehenen und nicht abgerauhten Oberfläche einer vulkanisierten Laufflächengummischicht (1C) an einer umfangsgerichteten unvulkanisierten Polstergummischicht (4), ohne eine Klebstoffbeschichtung dazwischen, wobei die umfangsgerichtete unvulkanisierte Polstergummischicht (4) über einer vulkanisierten Karkasse (5) liegt, um eine Einheit daraus zu bilden, und
(B) Vulkanisieren der Einheit auf einer erhöhten Temperatur, um den runderneuerten Reifen (10, 17) zu bilden;
wobei die vulkanisierte Laufflächengummischicht (1 C) hergestellt wird durch:
(1) Anbringen eines entfernbaren Polymerfilms (2) an mindestens einer Oberfläche eines unvulkanisierten Laufflächengummistreifens (1), um ein Komposit (9) daraus zu bilden;
(2) Anbringen einer Trennmittelbeschichtung an Oberflächen des Komposits (9), einschließlich mindestens eines Teils des Polymerfilms (2);
(3) Anbringen des trennmittelbeschichteten Komposits (9) an einer Metallplatte (3), um eine Einheit daraus zu bilden, wobei die Metallplatte (3) eine Vielzahl von Vorsprüngen (6) darauf aufweist;
(4) Positionieren der Einheit in einem Formwerkzeug und Anlegen von erhöhter Temperatur und Druck, um zu veranlassen, dass die Vorsprünge (6) der Metallplatte (3) sich in die Oberfläche des unvulkanisierten Laufflächengummistreifens (1) erstrecken und verriegelbare Hohlräume (7) darin bilden, und Vulkanisieren des verriegelbare Hohlräume enthaltenden unvulkanisierten Laufflächengummistreifens (1) auf einer erhöhten Temperatur, um ein vulkanisiertes Laufflächengummistreifenkomposit zu bilden, umfasssend eine vulkanisierte Laufflächengummischicht (1C) mit einer Vielzahl verriegelbarer Hohlräume (7, 14) in ihrer Unterseite und den auf die vulkanisierte Laufflächengummischicht (1C) einschließlich der Wände ihrer verriegelbaren Hohlräume (7, 14) aufgeformten entfernbaren Polymerfilm (2);
(5) Entfernen des Polymerfilms (2) von der vulkanisierten Laufflächengummischicht (1 C), um, vor dem Anbringen der vulkanisierten Laufflächengummischicht (1C) an der umfangsgerichteten unvulkanisierten Polstergummischicht (4), eine saubere, nicht abgerauhte Oberfläche auf der vulkanisierten Laufflächengummischicht (1 C) zu bilden.

6. Verfahren zur Herstellung eines runderneuerten Reifens (10, 17), wobei das Verfahren umfasst:
(A) Anbringen einer sauberen, nicht mit Klebstoff versehenen und nicht abgerauhten Oberfläche einer vulkanisierten Laufflächengummischicht (1C) an einer umfangsgerichteten unvulkanisierten Polstergummischicht (4), ohne eine Klebstoffbeschichtung dazwischen, wobei die umfangsgerichtete unvulkanisierte Polstergummischicht (4) über einer vulkanisierten Karkasse (5) liegt, um eine Einheit daraus zu bilden, und
(B) Vulkanisieren der Einheit auf einer erhöhten Temperatur, um den vulkanisierten runderneuerten Reifen (10, 17) zu bilden;
wobei die vulkanisierte Laufflächengummischicht (1 C) hergestellt wird durch:
(1) Anbringen eines entfernbaren Polymerfilms (2) an mindestens einer Oberfläche eines unvulkanisierten Laufflächengummistreifens (1), um ein Komposit daraus zu bilden, wobei der Polymerfilm (2) einen Schmelzpunkt, ASTM D789, aufweist, der höher oder beträchtlich höher ist als die Vulkanisationstemperatur für den unvulkanisierten Laufflächengummistreifen (1), und wobei der Polymerfilm (2) eine Vielzahl von Vorsprüngen (6) darauf aufweist;
(2) Anbringen eines Formwerkzeugtrennmittels an Oberflächen des Komposits (9) einschließlich mindestens eines Teils der Oberfläche des Polymerfilms (2) auf dem unvulkanisierten Laufflächengummistreifen (1);
(3) Anbringen des trennmittelbeschichteten Komposits (9) an einer Metallplatte (3) mit flacher Oberfläche und Bilden einer Einheit aus dem trennmittelbeschichteten Komposit (9) und der Metallplatte (3);
(4) Positionieren der Einheit in einem Formwerkzeug und Anlegen von erhöhter Temperatur und Druck, um zu veranlassen, dass die Vorsprünge (6) des Polymerfilms (2) sich in die Oberfläche des unvulkanisierten Laufflächengummistreifens (1) erstrecken und verriegelbare Hohlräume (7) darin bilden, und Vulkanisieren des unvulkanisierten Laufflächengummistreifens (1) auf einer erhöhten Temperatur, um eine(n) vulkanisierte(n) Laufflächengummistreifen oder -schicht (1) zu bilden, auf den bzw. die der entfernbare Polymerfilm (2) aufgeformt ist, einschließlich der Wände seiner bzw. ihrer verriegelbaren Hohlräume (7).

7. Verfahren nach Anspruch 5 oder 6, wobei die unvulkanisierte Polstergummischicht (4) aus einer Kautschukzusammensetzung besteht, die mindestens ein Elastomer auf Basis konjugierten Diens umfasst, das eine Bis-Imid-Verbindung und ein Tackifierharz enthält.

8. Verfahren nach Anspruch 7, wobei die unvulkanisierte Polstergummischicht (4) natürlichen (cis-1,4-Polyisopren-) Kautschuk und cis-1,4-Polybutadienkautschuk umfasst, und wobei das Bis-Amid N,N'-m-Xylenbiscitraconimid; N,N'-m-Phenylenbismaleimid, 1,1'(Methylendi-4,1 - phenylen)bismaleimid oder Kombinationen davon umfasst.

9. Verfahren nach Anspruch 7, wobei der Tackifier ein Phenol-Formaldehydharz umfasst.

10. Verfahren nach Anspruch 5 oder 6, wobei der Polymerfilm (2), bei seinem Entfernen von der vulkanisierten Laufflächengummischicht (1C) und zugehörigen Wänden der verriegelbaren Hohlräume, eine saubere Gummioberfläche der vulkanisierten Laufflächengummischicht (1 C) bereitstellt, einschließlich der Wände der verriegelbaren Hohlräume (7), um dadurch die Oberfläche und die verriegelbaren Hohlräume der vulkanisierten Laufflächengummischicht (1 C) für mechanisch-chemisches Miteinanderverriegeln mit der unvulkanisierten Polstergummischicht (4) des Reifens (10, 17) verfügbar zu machen.

11. Verfahren nach Anspruch 5 oder 6, wobei die Hohlräume trapezförmig gestaltete Hohlräume sind.

12. Verfahren nach Anspruch 5 oder 6, wobei der Polymerfilm (2) Nylon 6,6 oder Nylon 6 umfasst oder ein Nylonfilm oder ein Polymerfilm auf Nylonbasis ist.

13. Verfahren nach Anspruch 5 oder 6, wobei das Trennmittel ein Trennmittel auf Polysiloxanbasis ist.

14. Verfahren nach Anspruch 5 oder 6, wobei der runderneuerte Reifen (10, 17) frei von einer Klebstoffbeschichtung zwischen der vulkanisierten Laufflächengummischicht (1 C) und der Polstergummischicht (4) ist.

## Revendications

1. Bandage pneumatique rechapé comprenant une couche circonférentielle de caoutchouc de bande de roulement vulcanisé (1C) et une carcasse (5), la couche de caoutchouc de bande de roulement vulcanisé (1C) comprenant une surface comprenant des cavités (7, 14) qui s'entrecroisent par voie mécano-chimique avec une couche de caoutchouc de rembourrage (4) recouvrant la carcasse (5), **caractérisé en ce que** le bandage pneumatique rechapé est exempt d'un revêtement adhésif entre la couche de caoutchouc de bande de roulement vulcanisé (1C) et la couche de caoutchouc de rembourrage (4), et **en ce que** la couche de caoutchouc de rembourrage (4) représente une composition de caoutchouc comprenant au moins un élastomère à base de diène conjugué qui contient un composé de bis-imide et une résine qui rend collant.

2. Bandage pneumatique rechapé selon la revendication 1, dans lequel la couche de caoutchouc de rembourrage (4) représente une composition de caoutchouc comprenant du caoutchouc naturel (1,4-cis-polyisoprène) et du caoutchouc de 1,4-cis-polybutadiène, et dans lequel le bis-imide comprend du N,N'-imide biscitraconique de m-xylène, du N,N'-bismaléimide de m-phénylène, du 1,1'-(méthylène-4,1-phénylène)-bismaléimide, ou une de leurs combinaisons.

3. Bandage pneumatique rechapé selon la revendication 1 ou 2, dans lequel l'agent rendant collant comprend une résine rendant collant à base de phénol-formaldéhyde.

4. Bandage pneumatique rechapé selon la revendication 1, dans lequel les cavités (7, 14) sont des cavités configurées en trapèze.

5. Procédé de préparation d'un bandage pneumatique rechapé (10, 17), le procédé comprenant le fait de :
(A) appliquer une surface propre, non cémentée et non polie d'une couche de caoutchouc de bande de roulement vulcanisé (1C) sur une couche circonférentielle de caoutchouc de rembourrage non vulcanisé (4), en l'absence d'un revêtement adhésif entre les deux, la couche circonférentielle de caoutchouc de rembourrage non vulcanisé (4) recouvrant une carcasse vulcanisée (5) afin d'obtenir un assemblage ; et
(B) vulcaniser l'assemblage à une température élevée pour obtenir le bandage pneumatique rechapé (10, 17) ;
dans lequel on prépare la couche de caoutchouc de bande de roulement vulcanisé (1C) :
(1) par l'application d'un film un polymère amovible (2) sur au moins une surface de ruban de caoutchouc de bande de roulement non vulcanisé (1) afin d'obtenir un composite (9) ;
(2) par l'application d'un agent de démoulage sur les surfaces du composite (9), y compris sur au moins une portion du film polymère (2) ;
(3) par l'application du composite (9) comportant l'agent de démoulage sur une plaque métallique (3) pour obtenir un assemblage, plusieurs saillies (6) étant disposées sur la plaque métallique (3) ;
(4) par le positionnement de l'assemblage dans un moule et l'application d'une température élevée et d'une pression élevée pour faire en sorte que les saillies (6) de la plaque métallique (3) s'étendent dans la surface du ruban de caoutchouc de bande de roulement non vulcanisé (1) pour y former des cavités verrouillables (7), et la vulcanisation du ruban de caoutchouc de bande de roulement non vulcanisé (1) contenant les cavités verrouillables à une température élevée pour obtenir un composite de ruban de caoutchouc de bande de roulement vulcanisé comprenant une couche de caoutchouc de bande de roulement vulcanisé (1C) comportant plusieurs cavités verrouillables (7, 14) dans sa surface inférieure et le film polymère amovible (2) moulé sur la couche de caoutchouc de bande de roulement vulcanisé (1C) , y compris sur les parois de ses cavités verrouillables (7, 14) ;
(5) par le retrait du film polymère (2) par rapport à la couche de caoutchouc de bande de roulement vulcanisé (1C) afin d'obtenir une surface propre, non polie sur la couche de caoutchouc de bande de roulement vulcanisé (1C) avant d'appliquer la couche de caoutchouc de bande de roulement vulcanisé (1C) sur la couche circonférentielle (4) de caoutchouc de rembourrage non vulcanisé.

6. Procédé de préparation d'un bandage pneumatique rechapé (10, 17), le procédé comprenant le fait de :
(A) appliquer une surface propre, non cémentée et non polie d'une couche de caoutchouc de bande de roulement vulcanisé (1C) sur une couche circonférentielle de caoutchouc de rembourrage non vulcanisé (4), en l'absence d'un revêtement adhésif entre les deux, la couche circonférentielle de caoutchouc de rembourrage non vulcanisé (4) recouvrant une carcasse vulcanisée (5) afin d'obtenir un assemblage ; et
(B) vulcaniser l'assemblage à une température élevée pour obtenir le bandage pneumatique rechapé (10, 17) ;
dans lequel on prépare la couche de caoutchouc de bande de roulement vulcanisé (1C) :
(1) par l'application d'un film polymère amovible (2) sur au moins une surface de ruban de caoutchouc de bande de roulement non vulcanisé (1) afin d'obtenir un composite, le film polymère (2) possédant un point de fusion, norme ASTM 789, supérieur ou significativement supérieur à la température de vulcanisation pour le ruban de caoutchouc de bande de roulement non vulcanisé (1), plusieurs saillies (6) étant disposées sur le film polymère (2) ;
(2) par l'application d'un agent de démoulage sur les surfaces du composite (9), y compris sur au moins une portion de la surface du film polymère (2) sur le ruban de caoutchouc de bande de roulement non vulcanisé (1) ;
(3) par l'application du composite (9) comportant l'agent de démoulage sur une plaque métallique (3) possédant une surface plate et la formation d'un assemblage du composite (9) comportant l'agent de démoulage et de la plaque métallique (3) ;
(4) par le positionnement de l'assemblage dans un moule et par l'application d'une température élevée et d'une pression élevée pour faire en sorte que les saillies (6) du film polymère (2) s'étendent dans la surface du ruban de caoutchouc de bande de roulement non vulcanisé (1) pour y former des cavités verrouillables (7), et par la vulcanisation du ruban de caoutchouc de bande de roulement non vulcanisé (1) contenant les cavités verrouillables à une température élevée pour obtenir une couche ou un ruban de caoutchouc de bande de roulement vulcanisé (1) sur lequel est moulé le film polymère amovible (2), y compris sur les parois de ses cavités verrouillables (7).

7. Procédé selon la revendication 5 ou 6, dans lequel la couche de caoutchouc de rembourrage non vulcanisé (4) représente une composition de caoutchouc comprenant au moins un élastomère à base de diène conjugué qui contient un composé de bis-imide et une résine qui rend collant.

8. Procédé selon la revendication 7, dans lequel la couche de caoutchouc de rembourrage (4) représente une composition de caoutchouc comprenant du caoutchouc naturel (1,4-cis-polyisoprène) et du caoutchouc de 1,4-cis-polybutadiène, et dans lequel le bis-imide comprend du N,N'-imide biscitraconique de m-xylène, du N,N'-bismaléimide de m-phénylène, du 1,1'-(méthylène-4,1-phénylène)-bismaléimide, ou une de leurs combinaisons.

9. Procédé selon la revendication 7, dans lequel l'agent rendant collant comprend une résine rendant collant à base de phénol-formaldéhyde.

10. Procédé selon la revendication 5 ou 6, dans lequel le film polymère (2), après son retrait de la couche de caoutchouc de bande de roulement vulcanisé (1C) et des parois associées des cavités verrouillables, procure une surface propre de caoutchouc de la couche de caoutchouc de bande de roulement vulcanisé (1C), y compris des parois des cavités verrouillables, pour ainsi rendre la surface et les cavités verrouillables de la couche de caoutchouc de bande de roulement vulcanisé (1C) disponibles pour l'entrecroisement mécano-chimique avec la couche de caoutchouc de rembourrage non vulcanisé (4) du bandage pneumatique (10, 17).

11. Procédé selon la revendication 5 ou 6, dans lequel les cavités (7, 14) sont des cavités configurées en trapèze.

12. Procédé selon la revendication 5 ou 6, dans lequel le film polymère (2) comprend du nylon 6,6 ou du nylon 6 ou représente le film de nylon ou un film polymère à base de nylon.

13. Procédé selon la revendication 5 ou 6, dans lequel l'agent de démoulage est un agent de démoulage à base de polysiloxane.

14. Procédé selon la revendication 5 ou 6, dans lequel le bandage pneumatique rechapé (10, 17) est exempt d'un revêtement adhésif entre la couche de caoutchouc de bande de roulement vulcanisé (1C) et la couche de caoutchouc de rembourrage non vulcanisé (4).
